# EUROPÄISCHE PATENTSCHRIFT

(11) **EP 1 152 662 B1**
(45) Veröffentlichungstag und Bekanntmachung des Hinweises auf die Patenterteilung: **17.09.2003**
(21) Anmeldenummer: 00903577.5
(22) Anmeldetag: 14.01.2000
(51) Int. Cl.: A01N 43/12

(54) **VERWENDUNG VON 3-(2,4,6-TRIMETHYLPHENYL)- 4-NEOPENTYLCARBONYLOXY- 5,5-TETRAMETHYLEN-$g(D)?3 - DIHYDROFURAN-2- N ZUR BEKÄMPFUNG DER WEISSEN FLIEGE**
USE OF 3-(2,4,6-TRIMETHYLPHENYL)- 4-NEOPENTYLCARBONYLOXY- 5,5- TETR AMETHYLENE-DELTA?3 - DIHYDROFURANE-2- ON FOR CONTROLLING THE WHITE FLY
UTILISATION DU 3-(2,4,6- TRIMETHYLPHENYL)-4- NEOPENTYLCARBONYLOXY-5,5-TETRAMETHYLENE-DELTA ?3 - DIHYDROFURANNE-2- ONE POUR LA DESTRUCTION D'INSECTES DU GENRE PUCERONS ET COCHENILLES

(30) Priorität: 20.01.1999 DE 19901943
(43) Veröffentlichungstag der Anmeldung: 14.11.2001
(73) Patentinhaber: Bayer CropScience AG, 40789 Monheim (DE)
(72) Erfinder: WACHENDORFF-NEUMANN, Ulrike, D-56566 Neuwied (DE)
(86) Internationale Anmeldenummer: EP0000257
(87) Internationale Veröffentlichungsnummer: WO00042850

(56) Entgegenhaltungen:
- EP-A- 0 528 156
- A. R. HOROWITZ, G. FORER & I. ISHAAYA: "Managing resistance in Bemisia tabaci in Israel with emphasis on cotton." PESTIC. SCI., Bd. 42, Nr. 2, Oktober 1994 (1994-10), Seiten 113-122, XP000882657

## Beschreibung

Die vorliegende Anmeldung betrifft die Verwendung von 3-(2,4,6-Trimethylphenyl)-4-neopentylcarbonyloxy-5,5-tetramethylen-Δ³-dihydrofuran-2-on zur Bekämpfung von Insekten aus der Familie Aleurodidae (Weiße Fliege).

Die Verbindung 3-(2,4,6-Trimethylphenyl)-4-neopentylearbonyloxy-5,5-tetramethylen-Δ³-dihydrofuran-2-on ist aus der EP-A-0 528 156 bekannt.

Ferner ist aus der EP-A-0 528 156 bekannt, daß 3-(2,4,6-Trimethylphenyl)-4-neopentylcarbonyloxy-5,5-tetramethylen-Δ³-dihydrofuran-2-on insektizid wirksam ist.

Überraschenderweise wurde jetzt gefunden, daß 3-(2,4,6-Trimethylphenyl)-4-neopentylcarbonyloxy-5,5-tetramethylen-Δ³-dihydrofuran-2-on besonders gut zur Bekämpfung von Insekten aus der Familie Aleurodidae (Weiße Fliege) geeignet ist und darüber hinaus eine wesentlich bessere Wirkung aufweist als die konstitutionell ähnlichsten aus EP-A-0 528 156 bekannten Verbindungen.

Die vorliegende Erfindung betrifft demnach die Verwendung von 3-(2,4,6-Trimethylphenyl)-4-neopentylcarbonyloxy-5,5-tetramethylen-Δ³-dihydrofuran-2-on zur Bekämpfung von Insekten aus der Familie Aleurodidae (Weiße Fliege).

3-(2,4,6-Trimethylphenyl)-4-neopentylcarbonyloxy-5,5-tetramethylen-Δ³-dihydrofuran-2-on besitzt die folgende Formel (I):

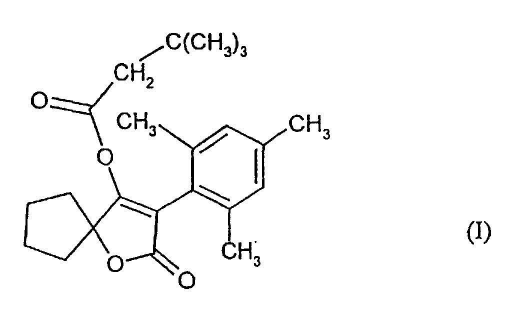

Die Verbindung der Formel (I) kann bevorzugt für die Bekämpfung von Insekten aus den Gattungen Bemisia, Trialeurodes, Aleurotrixus, Allurodes, Dialeurodes und Aleurocanthus eingesetzt werden. Beispielhaft seien folgende Arten genannt: Trialeurodes vaporariorum, Bemisia tabaci, Aleurotrixus floccosus und Aleurodes brassicae.

Grundsätzlich kann die Verbindung der Formel (I) in einer Vielzahl von Kulturen eingesetzt werden, bevorzugt in Baumwolle, Gemüse (z.B. Tomate, Auberginen, Bohnen, Gurken, Zucchini, Paprika, Melonen) Zierpflanzen, Tabak und Citrus.

Der Wirkstoff der Formel (I) kann in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoffimprägnierte Natur- und synthetische Stoffe sowie Feinstverkapselungen in polymeren Stoffen.

Diese Formulierungen werden in bekannter Weise hergestellt, z.B. durch Vermischen des Wirkstoffs mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

### Als feste Trägerstoffe kommen in Frage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Einweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoff, vorzugsweise zwischen 0,5 und 90 % und daneben bevorzugt Streckmittel und/oder oberflächenaktive Mittel.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepaßten üblichen Weise.

### Herstellung der Verbindung der Formel (I):

5.45 g (20 mmol) 3-(2,4,6-Trimethylphenyl)-4-hydroxy-5,5-tetramethylen-Δ³-dihydrofuran-2-on (bekannt aus EP-A-0 528 156) werden in 80 ml Dichlormethan vorgelegt, 3.04 g (30 mmol) Triethylamin zugesetzt und anschließend bei 0-10°C eine Lösung von 3,50 g (26 mmol) 3,3-Dimethylbuttersäurechlorid in 20 ml Dichlormethan zugetropft.

Nach 2 Stunden werden weitere 0,50 g (5 mmol) Triethylamin und 0,40 g (3 mmol) Säurechlorid zugesetzt und weitere 16 Stunden bei Raumtemperatur gerührt.

Zur Aufarbeitung wäscht man 2 mal mit 10 %iger Citronensäure und 2 mal mit 1N Natronlauge, trocknet die organische Phase mit Natriumsulfat und engt ein.

Ein weitere Reinigung des Rohproduktes erreicht man durch Verreiben mit Petrol-ether, absaugen und trocknen.

Ausbeute: 4.50 g weißer Feststoff (61 % d. Th.) vom Schmelzpunkt: 98°C.

### Anwendungsbeispiel

### Bemisia-Test

- Lösungsmittel:: 7,5 Gewichtsteile Dimethylformamid
- Emulgator:: 2,5 Gewichtsteil Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschten Konzentrationen.

Baunzwollpflanzen (Gossypium hirsutum), die von Eiern, Larven und Puparien der Weißen Fliege *Bemisia tabaci* befallen sind, werden in eine Wirkstoffzubereitung der gewünschten Konzentration getaucht.

Nach der gewünschten Zeit wird die Abtötung in % bestimmt. Dabei bedeutet 100 %, daß alle Tiere abgetötet wurden; 0 % bedeutet, daß keine Tiere abgetötet wurden.

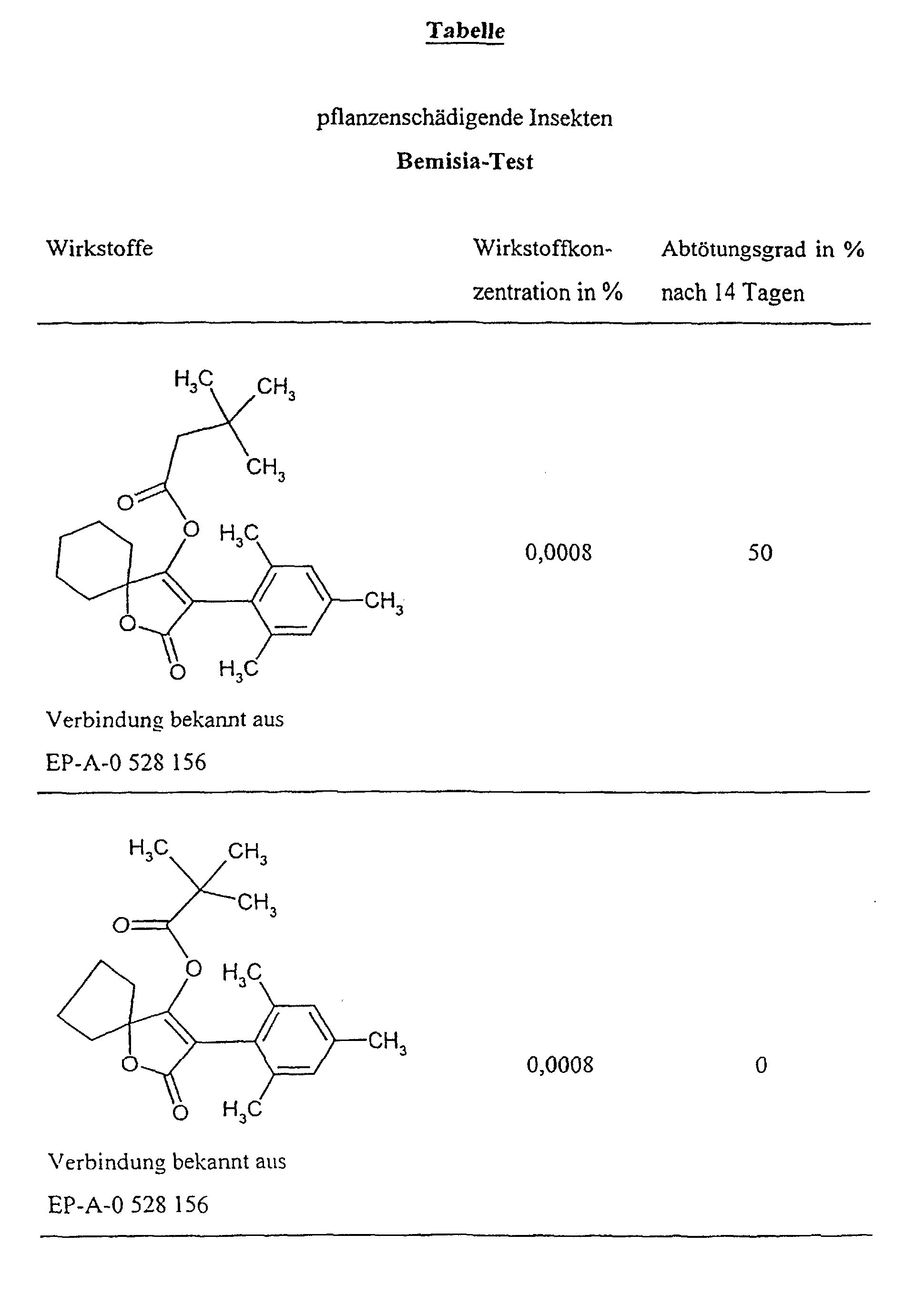

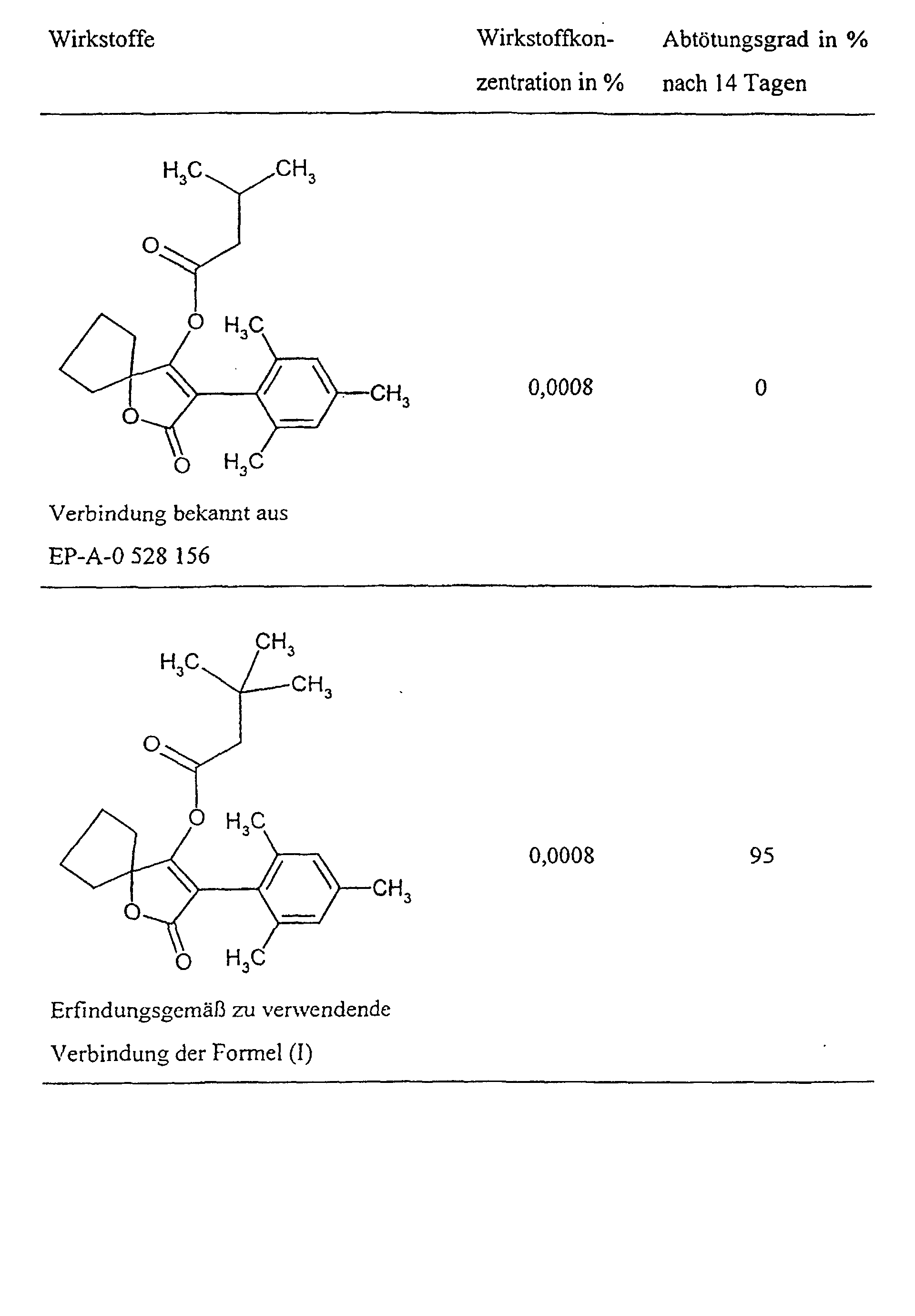

## Patentansprüche

1. Verwendung der Verbindung der Formel (I) 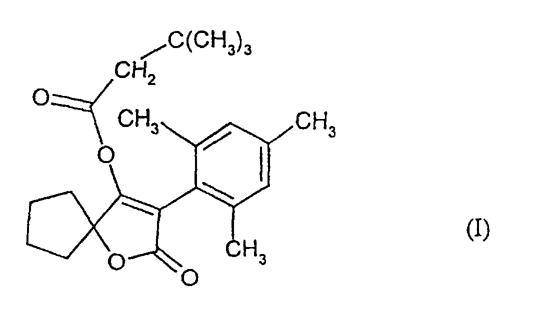 zur Bekämpfung von Insekten aus der Familie Aleurodidae (Weiße Fliege).

## Claims

1. Use of the compound of the formula (I) 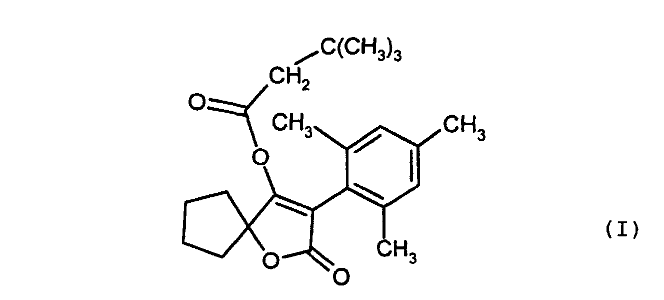 for controlling insects of the family Aleurodidae (white fly).

## Revendications

1. Utilisation du composé de formule (I) 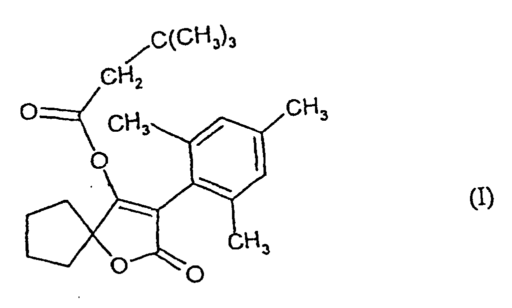 pour combattre des insectes de la famille des Aleurodidae (mouches blanches).
